# EUROPÄISCHE PATENTANMELDUNG

(11) **EP 3 319 099 A1**
(43) Veröffentlichungstag der Anmeldung: **09.05.2018**
(21) Anmeldenummer: 17194294.9
(22) Anmeldetag: 02.10.2017
(51) Int. Cl.: H01G 11/26, H01G 11/68, H01G 11/70, H01M 2/02, H01M 2/16, H01M 4/62, H01M 10/052, H01M 4/38, H01M 4/525, H01M 4/587, H01M 4/505

(54) **BATTERIEZELLE UND BATTERIE UMFASSEND ELEKTROAKTIVE POLYMERE**

(30) Priorität: 02.11.2016 DE 102016221475
(71) Anmelder: Robert Bosch GmbH, 70442 Stuttgart (DE)
(72) Erfinder: Schmid, Florian, 70435 Stuttgart (DE); Buchkremer, Anne, 70193 Stuttgart (DE)

(57) **Zusammenfassung**

Die Erfindung betrifft eine Batteriezelle (2), welche mindestens eine negative Elektrode (21), mindestens eine positive Elektrode (22) und mindestens einen Elektrolyt (15) umfasst, wobei die Batteriezelle (2) ferner mindestens ein elektroaktives Material (50) umfasst, welches durch Anlegen einer elektrischen Spannung zu einer Volumen- und/oder Formänderung angeregt werden kann. Die Erfindung betrifft auch eine Batterie, umfassend mindestens eine Batteriezelle (2), wobei die Batterie ferner mindestens ein elektroaktives Material (50) umfasst, welches durch Anlegen einer elektrischen Spannung zu einer Volumen- und/oder Formänderung angeregt werden kann. Ferner betrifft die Erfindung ein Verfahren zum Ausgleich von Volumen- und/oder Formänderungen in einer erfindungsgemäßen Batteriezelle (2) sowie in einer erfindungsgemäßen Batterie.

## Beschreibung

Die Erfindung betrifft eine Batteriezelle und eine Batterie, die in der Lage sind, eine während des Beladungsvorgangs oder Entladungsvorgangs auftretende Volumen- und/oder Formänderung auszugleichen. Ferner betrifft die Erfindung ein Verfahren zum Ausgleich von Volumen- und/oder Formänderungen in einer Batteriezelle und/oder in einer Batterie sowie die Verwendung einer Batteriezelle und/oder einer Batterie.

### Stand der Technik

Die Speicherung elektrischer Energie hat in den vergangenen Jahrzehnten eine immer größere Bedeutung erlangt. Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie (auch Batteriemodul genannt) umfasst dabei eine oder mehrere Batteriezellen (elektrochemische Zellen).

In einem Akkumulator finden häufig Lithium enthaltende Elektroden umfassend Lithium-Ionen (sogenannte Lithium-Ionen-Batterie) oder auch metallisches Lithium (sogenannte Lithium-Metall-Batterie) Verwendung. Diese zeichnen sich unter anderem durch hohe spezifische Energie, gute thermische Stabilität und eine äußerst geringe Selbstentladung aus.

Lithium enthaltende Batteriezellen weisen eine positive Elektrode und eine negative Elektrode auf. Die positive sowie die negative Elektrode umfassen je einen Stromableiter, auf dem ein positives bzw. negatives Aktivmaterial aufgebracht ist. Das positive und negative Aktivmaterial ist insbesondere dadurch gekennzeichnet, dass es zur reversiblen Einlagerung und Abgabe von Lithium-Ionen fähig ist.

Bei dem Aktivmaterial für die negative Elektrode einer solchen Batteriezelle handelt es sich beispielsweise um amorphes Silizium, welches Interkalationsverbindungen mit Lithium-Atomen bilden kann. Aber auch Kohlenstoffverbindungen, wie z.B. Graphit, oder metallisches Lithium sind als Aktivmaterial für negative Elektroden verbreitet. Als Aktivmaterial für die positive Elektrode wird in der Regel ein Lithium-haltiges Metalloxid oder ein Lithium-haltiges Metallphosphat verwendet.

Darüber hinaus umfassen die Batteriezellen in der Regel einen Separator, welcher einen Kontakt zwischen den Elektroden unterbindet, sowie einen Elektrolyt, welcher den Transport von Ladungsträgern zwischen den Elektroden ermöglicht.

US 2015/0104691 A1 offenbart Sekundärbatterien, welche Elektrolytschichten umfassen, die nicht-wässrige Elektrolytlösungen und eine Polymerverbindung umfassen. Die Polymerverbindung ist eine Pfropfcopolymer, umfassend ein Blockcopolymer aus Vinylidenfluorideinheiten und Hexafluoropropyleneinheiten als Hauptkette und Seitenketten unterschiedlicher Homo- und/oder Copolymere.

US 2009/0030152 A1 offenbart die Verwendung verschiedener Polyvinylidenfluorid enthaltender Copolymere als Energiespeichermaterialien in Kondensatoren.

Beim Betrieb der Batteriezelle, also bei einem Entladungsvorgang, fließen Elektronen in einem äußeren Stromkreis von der negativen Elektrode zur positiven Elektrode. Innerhalb der Batteriezelle wandern Lithium-Ionen bei einem Entladungsvorgang von der negativen Elektrode zur positiven Elektrode. Dabei lagern die Lithium-Ionen aus dem Aktivmaterial der negativen Elektrode reversibel aus, was auch als Delithiierung bezeichnet wird. Bei einem Beladungsvorgang der Batteriezelle wandern die Lithium-Ionen von der positiven Elektrode zu der negativen Elektrode. Dabei lagern die Lithium-Ionen wieder in das Aktivmaterial der negativen Elektrode reversibel ein, was auch als Lithiierung bezeichnet wird.

Die Lithiierung bzw. Delithiierung der negativen Elektrode ist mit einer Volumen- und/oder Formänderung verbunden. Beim Laden einer Batteriezelle findet beispielsweise bei der Verwendung einer Li-Metallanode eine Volumenzunahme ggf. begleitet von einer Formänderung statt. Eine vollständig geladene Batteriezelle kann so ein um ca. 15% erhöhtes Volumen gegenüber der entladenen Batteriezelle aufzeigen. Diese regelmäßig auftretende Volumen- und/oder Formänderung führt zu lokalen räumlichen Verschiebungen z.B. der Stromableiter, und zu Veränderungen bei der Ausfüllung der Batteriezelle. Hiermit sind Schwierigkeiten hinsichtlich der Konstruktion einer Batterie aus einer Vielzahl von Batteriezellen verbunden. Die Verwendung von Schäumen oder ähnlichen Materialien, welche die Volumen- bzw. Formänderung abfangen könnten, führt unter Umständen dazu, dass unterschiedliche Drücken auf die Elektroden und den Separator einwirken, je nachdem ob die Batteriezelle geladen oder entladen vorliegt. Dies kann eine ungleichmäßige Leistung der Batteriezelle über den Betriebszeitraum zur Folge haben. Ebenso hat der Be- bzw. Entladungsvorgang Einfluss auf das Volumen und/oder die Form des Aktivmaterials der positiven Elektrode. Dieser fällt in der Regel geringer aus als bei der negativen Elektrode.

### Offenbarung der Erfindung

Die Erfindung betrifft eine Batteriezelle, insbesondere eine Lithium-Ionen-Batteriezelle oder eine Lithium-Metall- Batteriezelle, welche mindestens eine negative Elektrode, mindestens eine positive Elektrode und mindestens einen Elektrolyt umfasst, wobei die Batteriezelle ferner mindestens ein elektroaktives Material umfasst, welches durch Anlegen einer elektrischen Spannung zu einer Volumen- und/oder Formänderung angeregt werden kann.

Ein elektroaktives Material im Sinne dieser Erfindung ist ein Material, welche durch Anlegen einer elektrischen Spannung zu einer Volumen- und/oder Formänderung angeregt werden kann. Darüber hinaus ist das elektroaktive Material vorzugsweise chemisch inert gegenüber den eingesetzten Aktivmaterialien und/oder Elektrolyten. Aktivmaterialien, welche üblicherweise für den Aufbau der positiven und/oder negativen Elektroden verwendet werden und während des Betriebs der Batteriezelle elektrochemische Reaktionen (RedoxReaktionen) unterlaufen, sind nicht unter dem Begriff eines elektroaktiven Materials im Sinne der Erfindung zu verstehen, auch wenn diese eine Volumen- und/oder Formänderung aufweisen können.

Die mindestens eine positive Elektrode umfasst mindestens einen Stromableiter. Der Stromableiter ist elektrisch leitfähig und ist vorzugsweise aus einem Metall, beispielsweise Aluminium, Kupfer, Nickel oder Legierungen dieser Metalle, gefertigt. In einer Ausführungsform ist der Stromableiter beispielsweise flächig ausgestaltet. Auf mindestens einer Oberfläche des Stromableiters ist eine Schicht aus einer Aktivmaterialzusammensetzung aufgebracht. Diese umfasst mindestens ein positives Aktivmaterial, vorzugsweise umfassend ein Lithium-haltiges Metalloxid, ein Lithium-haltiges Metallsulfit oder ein Lithium-haltiges Metallphosphat, sowie ggf. ein Bindemittel und/oder einen Leitzusatz.

In einer Ausführungsform kann das positive Aktivmaterial ein zusammengesetztes Oxid umfassen, welches mindestens ein Metall, ausgewählt aus der Gruppe bestehend aus Kobalt, Magnesium, Nickel, sowie Lithium, enthält.

Eine Ausführungsform der vorliegenden Erfindung enthält beispielsweise ein Kathodenaktivmaterial, umfassend eine Verbindung der Formel LiMO₂, wobei M ausgewählt ist aus Co, Ni, Mn oder Gemischen von diesen sowie Gemischen von diesen mit Al. Insbesondere ist LiCoO₂ zu nennen.

In einer bevorzugten Ausführungsform handelt es sich bei dem Kathodenaktivmaterial um ein Material, welches Nickel umfasst, d.h. LiNi₁₋ₓM'ₓO₂, wobei M' ausgewählt ist aus einem oder mehreren der Elemente Co, Mn und Al und 0 ≤ x < 1 ist. Beispiele umfassen Lithium-Nickel-Kobalt-Aluminium-Oxid-Kathoden (z.B. LiNi_{0,8}Co_{0,15}Al_{0,05}O₂; NCA) und Lithium-Nickel-Mangan-Kobalt-Oxid-Kathoden (z.B. LiNi_{0,8}Mn_{0,1}Co_{0,1}O₂ (NMC (811)), LiNi_{0,33}Mn_{0,33}Co_{0,33}O₂ (NMC (111)), LiNi_{0,6}Mn_{0,2}Co_{0,2}O₂ (NMC (622)), LiNi_{0,5}Mn_{0,3}Co_{0,2}O₂ (NMC (532)) oder LiNi_{0,4}Mn_{0,3}Co_{0,3}O₂ (NMC (433)).

Ferner sind als bevorzugte positive Aktivmaterialien überlithiierte Oxide zu nennen, welche dem Fachmann bekannt sind. Beispiele hierfür sind Schichtoxide der allgemeinen Formel n(Li₂MnO₃) : 1-n(LiMO₂) mit M = Co, Ni, Mn, Cr und 0 ≤ n ≤ 1 und Spinelle der allgemeinen Formel n(Li₂MnO₃) : 1-n(LiM₂O₄) mit M=Co, Ni, Mn, Cr und 0 ≤ n ≤ 1.

Ferner sind insbesondere Spinellverbindungen der Formel LiMₓMn₂₋ₓO₄ mit M = Ni, Co, Cu, Cr, Fe (z.B. LiMn₂O₄, LiNi_{0.5}Mn_{1.5}O₄), Olivinverbindungen der Formel LiMPO₄ mit M = Mn, Ni, Co, Cu, Cr, Fe (z.B. LiFePO₄, LiMnPO₄), Silikatverbindungen der Formel Li₂MSiO₄ mit M = Ni, Co, Cu, Cr, Fe, Mn (z.B. Li₂FeSiO₄), Tavoritverbindungen (z.B. LiVPO₄F), Li₂MnO₃, Li_{1.17}Ni_{0.17}Co_{0.1}Mn_{0.56}O₂ und Li₃V₂(PO₄)₃ als geeignete positive Aktivmaterialien hervorzuheben.

Als geeignete Bindemittel können beispielsweise Styrol-Butadien-Copolymer (SBR), Polyvinylidenfluorid (PVDF), Polytetrafluorethen (PTFE), Polyethylenoxid (PEO), Carboxymethylcellulose (CMC), Polyacrylsäure (PAA), Polyvinylalkohol (PVA) und Ethylen-Propylen-Dien-Terpolymer (EPDM) genannt werden.

Als Leitzusätze können beispielsweise Graphit oder Leitruß dienen, welche die elektrische Leitfähigkeit erhöhen. Darüber hinaus können zur Erhöhung der lonenleitfähigkeit Lithiumsalze zugegeben werden.

Die mindestens eine negative Elektrode umfasst ebenfalls mindestens einen Stromableiter. Der Stromableiter ist elektrisch leitfähig und ist vorzugsweise aus einem Metall, beispielsweise Aluminium, Kupfer, Nickel oder Legierungen dieser Metalle, gefertigt. Der Stromableiter weist mindestens eine Oberfläche auf. Beispielsweise kann Stromableiter flächig ausgestaltet sein. Insbesondere im Falle einer Li-Metallelektrode ist eine flächige Ausgestaltung nicht zwingend notwendig, solange ein ausreichender elektrischer Kontakt zwischen dem Elektrodenaktivmaterial (d.h. dem metallischen Lithium) und dem Stromableiter gewährleistet ist. Auf mindestens einer Oberfläche des Stromableiters ist eine Schicht aus einer Aktivmaterialzusammensetzung aufgebracht. Diese umfasst mindestens ein negatives Aktivmaterial, umfassend Silicium, Graphit, oder metallisches Lithium, sowie ggf. ein Bindemittel und/oder einen Leitzusatz.

Als geeignete Bindemittel können beispielsweise Styrol-Butadien-Copolymer (SBR), Polyvinylidenfluorid (PVDF), Polytetrafluorethen (PTFE), Polyethylenoxid (PEO), Carboxymethylcellulose (CMC), Polyacrylsäure (PAA), Polyvinylalkohol (PVA) und Ethylen-Propylen-Dien-Terpolymer (EPDM) genannt werden.

Als Leitzusätze können beispielsweise Graphit oder Leitruß dienen, welche die elektrische Leitfähigkeit erhöhen. Darüber hinaus können zur Erhöhung der lonenleitfähigkeit Lithiumsalze zugegeben werden.

Der mindestens eine Elektrolyt kann sowohl aus einem Flüssigelektrolyt als auch aus einem Festkörperelektrolyt oder einer Kombination aus einem Flüssigelektrolyt und einem Festkörperelektrolyt ausgewählt sein.

Ein Flüssigelektrolyt im Sinne dieser Erfindung ist eine Lösung eines Leitsalzes in einem geeigneten Lösungsmittel. Als geeignete Lösungsmittel sind insbesondere Acetonitril, Tetrahydrofuran, Diethylcarbonat oder γ-Butyrolacton sowie cyclische und acyclische Carbonate, insbesondere Propylencarbonat, Ethylencarbonat, Dimethylcarbonat, Diethylcarbonat, Ethylenmethylcarbonat, Ethylmethylcarbonat sowie Gemische davon zu nennen. Besonders bevorzugt sind Acetonitril, Propylencarbonat, Ethylencarbonat, Dimethylcarbonat, Diethylcarbonat, Ethylenmethylcarbonat, Ethylmethylcarbonat sowie Gemische davon.

Ferner umfasst der Flüssigelektrolyt mindestens ein Leitsalz. Geeignet sind insbesondere Lithiumsalze. Das Leitsalz kann beispielsweise ausgewählt sein aus der Gruppe bestehend aus Lithiumchlorat (LiClO₄), Lithiumtetrafluoroborat (LiBF₄), Lithiumhexafluorophosphat (LiPF₆), Lithiumhexafluoroarsenat (LiAsF₆), Lithiumtrifluormethansulfonat (LiSO₃CF₃), Lithiumbis(trifluormethylsulphonyl)imid (LiN(SO₂CF₃)₂, LiTfSi), Lithiumbis(pentafluorethylsulphonyl)imid (LiN(SO₂C₂F₅)₂), Lithiumbis(oxalato)borat (LiBOB, LiB(C₂O₄)₂), Lithiumdifluor(oxalato)borat (LiBF₂(C₂O₄)), Lithium-tris(pentafluorethyl)trifluorophosphat (LiPF₂(C₂F₅)₃) und Kombinationen davon.

Schließlich sind Festkörperelektrolyte, insbesondere Polymerelektrolyte und keramische Elektrolyte zu nennen. Insbesondere hervorzuheben sind Polymerelektrolyte auf Basis von Polyalkylenoxiden, insbesondere Polyethylenoxid, in dem ein Leitsalz eingearbeitete ist. Ebenfalls sind keramische Elektrolyte zu nennen, wie z.B. Oxidische lonenleiter (LATP (Li₁₋ₓAlₓTi₂₋ₓ(PO₄)₃), LLTO (LiₓLa_{2/3-x/3□1/3-2x/3}TiO₃), LLZO (Li₇La₃Zr₂O₁₂) oder Sulfidische lonenleiter (β-Li₃PS₄, Li₆PS₅Cl, LGPS (Li₁₀GeP₂S₁₂)) zu nennen.

Die Batteriezelle kann ferner einen Separator umfassen, welcher dazu dient einen elektrischen Kontakt zwischen den Elektroden zu unterbinden. Der Separator ist daher zwischen der mindestens einen negativen Elektrode und der mindestens einen positiven Elektrode angeordnet und trennt diese so voneinander. Der Separator ist vorzugsweise flächig ausgestaltet und weist vorzugsweise eine Größe auf, welche es ermöglicht, die gesamte Oberfläche der positiven bzw. negativen Elektrode zu bedecken. Der Separator ist aus einem Material gefertigt, welches einen Durchtritt von Ladungsträgern, die in dem Elektrolyt gelöst sind, ermöglicht. Somit weist der Separator eine ausreichend hohe lonenleitfähigkeit auf. Vorzugsweise ist der Separator porös. Sofern ein Festkörperelektrolyt verwendet wird und dieser derart zwischen den Elektroden angeordnet ist, dass ein elektrischer Kontakt der Elektroden effektiv unterbunden wird, ist der Einsatz eines Separators nicht erforderlich. Der Separator kann allerdings auch in diesem Fall eingesetzt werden, sofern die Verwendung zweckdienlich erscheint.

Geeignete Materialien, aus denen der Separator gefertigt sein kann, umfassen insbesondere Polymere, wie Cellulose, Polyolefine, Polyester und fluorierte Polymere. Besonders bevorzugte Polymere sind Cellulose, Polyethylen (PE), Polypropylen (PP), Polyethylenterephthalat (PET), Polytetrafluorethen (PTFE) und Polyvinylidenfluorid (PVdF). Ferner kann der Separator keramische Materialen umfassen oder aus diesen bestehen, sofern ein weitgehender (Lithium-)lonen-Transfer gewährleistet ist. Als Materialien sind insbesondere Keramiken, welche MgO oder Al₂O₃ umfassen, zu nennen. Der Separator kann aus einer Schicht aus einem oder mehreren der zuvor genannten Materialien bestehen oder auch aus mehreren Schichten, in denen jeweils eines oder mehrere der genannten Materialein miteinander kombiniert sind.

Gemäß der vorliegenden Erfindung umfasst die Batteriezelle zusätzlich mindestens ein elektroaktives Material. Das elektroaktive Material ist in der Lage durch das Anlegen einer elektrischen Spannung sein Volumen und/oder seine Form zu ändern. Dadurch kann der Volumen- und/oder Formänderung in der Batteriezelle, welche während des Be- bzw. Entladungsvorgangs stattfindet, gezielt entgegengewirkt werden. Es treten nur geringe oder sogar keine Verschiebungen innerhalb der Batteriezelle aufgrund der Volumen- und/oder Formänderungen in der Batteriezelle auf.

In einer Ausführungsform ist das elektroaktive Material, welches durch Anlegen einer elektrischen Spannung zu einer Volumen- und/oder Formänderung angeregt werden kann, in der Aktivmaterialzusammensetzung mindestens einer Elektrode eingearbeitet. Vorzugsweise ist das elektroaktive Material in der Aktivmaterialzusammensetzung mindestens einer negativen Elektrode eingearbeitet. Hierzu kann beispielsweise eine Zusammensetzung aus negativem Aktivmaterial, elektroaktivem Material, sowie ggf. Bindemittel und/oder Leitzusatz gebildet werden, welche anschließend ggf. unter Zusatz eines Lösungsmittels auf mindestens einer Oberfläche eines Stromableiters aufgebracht und - sofern notwendig - getrocknet und verdichtet wird. Alternativ kann das elektroaktive Material auch als Beschichtung auf die Oberfläche des partikelförmigen Aktivmaterials aufgebracht sein.

In einer weiteren Ausführungsform ist das elektroaktive Material flächig ausgestaltet, d.h. in Form einer elektroaktiven Materialschicht, insbesondere in Form einer elektroaktiven Materialfolie. Vorzugsweise entspricht das elektroaktive Material in Form und Größe dem der Elektrode, deren Volumen- und/oder Formänderung durch das elektroaktive Material ausgeglichen werden soll. Die flächig ausgestaltete elektroaktive Materialschicht kann so an beliebiger Stelle in die Batteriezelle eingelegt werden. In einer bevorzugten Ausführungsform wird die elektroaktive Materialschicht in unmittelbarer Nähe zu der Elektrode angeordnet, deren Volumen- und/oder Formänderung ausgeglichen werden soll. Beispielsweise kann die elektroaktive Materialschicht auf der Oberfläche einer Elektrode angeordnet sein, sofern hierdurch der Kontakt zu dem Elektrolyt nicht behindert wird. In diesem Fall ist die elektroaktive Materialschicht vorzugsweise porös ausgestaltet.

Alternativ kann die elektroaktive Materialschicht auch auf der Oberfläche des Stromableiters angeordnet sein. Diese Ausführungsform kann beispielsweise dadurch realisiert werden, dass der flächig ausgestaltete Stromableiter auf einer Oberfläche mit einer elektroaktivem Materialschicht versehen ist und auf der anderen Oberfläche mit dem jeweiligen Aktivmaterial bzw. der jeweiligen Aktivmaterialzusammensetzung. Alternativ ist es auch möglich, die elektroaktive Materialschicht auf der Oberfläche des Stromableiters aufzubringen und anschließend darauf das jeweilige Aktivmaterial bzw. die Aktivmaterialzusammensetzung, z.B. in Form einer Aktivmaterialschicht bzw. Aktivmaterialzusammensetzungsschicht, aufzubringen. In diesem Fall muss das elektroaktive Material eine hohe elektrische Leitfähigkeit aufweise, um den Transport der elektrischen Ladung zwischen dem Aktivmaterial und dem Stromableiter zu gewährleisten.

In einer weiteren Ausführungsform kann die elektroaktive Materialschicht auf mindestens einer Oberfläche des Separators aufgebracht sein, vorzugsweise auf beiden Oberflächen des Separators, sofern hierdurch der Transport der Ladungsträger durch den Separator nicht behindert wird. In diesem Fall ist die elektroaktive Materialschicht vorzugsweise porös ausgestaltet. In einer bevorzugten Ausführungsform besteht der Separator aus dem elektroaktivem Material und das elektroaktive Material ist so ausgewählt, dass der elektrische Kontakt zwischen den Elektroden unterbunden wird.

Es wird auch eine Batterie vorgeschlagen, welche mindestens eine erfindungsgemäße Batteriezelle umfasst.

Ferner wird eine Batterie vorgeschlagen, welche mindestens eine Batteriezelle umfasst, wobei die Batterie ferner mindestens ein elektroaktives Material umfasst, welches durch Anlegen einer elektrischen Spannung zu einer Volumen- und/oder Formänderung angeregt werden kann.

Das elektroaktive Material ist dabei nicht zwingend in der Batteriezelle verbaut, sondern befindet sich neben der mindestens einen Batteriezelle. Zusätzlich kann aber auch elektroaktive Material in der mindestens einen Batteriezelle vorgesehen sein.

Vorzugsweise umfasst die Batterie mindestens zwei Batteriezellen, wobei das elektroaktive Material zwischen den Batteriezellen angeordnet ist. Insbesondere kann das elektroaktive Material in einem Verbund einer Vielzahl einzelner Batteriezellen in der Batterie zwischen den einzelnen Batteriezellen angeordnet sein.

Die Anzahl und Schichtdicke der elektroaktiven Materialschichten kann frei an die jeweiligen Bedürfnisse, insbesondere an das Ausmaß der auszugleichenden Volumen- und/oder Formänderungen angepasst werden.

Das elektroaktive Material der erfindungsgemäßen Batteriezelle sowie der erfindungsgemäßen Batterie kann aus jedem Material ausgewählt sein, welches durch Anlegen einer elektrischen Spannung zu einer Volumen- und/oder Formänderung in Form einer Expansion oder Kontraktion angeregt werden kann und im Übrigen inert gegenüber elektrochemischer Redoxreaktionen mit den übrigen Bestandteilen der Batteriezelle sind. Beispiele sind Hydrogele, leitfähige Polymere und ionische Polymer-Metallkomposite. Die Polymer-Metallkomposite umfassen beispielsweise Chrom, Aluminium, Gold, Platin oder Kombinationen davon als Metallbestandteile.

In einer bevorzugten Ausführungsform ist das elektroaktive Material der erfindungsgemäßen Batteriezelle sowie der erfindungsgemäßen Batterie selbst nicht elektrisch leitfähig. Vorzugsweise handelt es sich daher bei dem elektroaktiven Material um ein elektroaktives Polymer, insbesondere ein piezoelektrisches, elektrostriktives und/oder dielektrisches Elastomer.

Das elektroaktive Polymer kann dabei innerhalb der erfindungsgemäßen Batteriezelle sowie innerhalb der erfindungsgemäßen Batterie als elektroaktives Material eingesetzt werden.

Geeignete elektroaktive Polymere sind vorzugsweise Homo- oder Copolymere, welche aus Monomereinheiten aufgebaut sind, die mindestens Vinylidenfluorid als eine Monomereinheit umfassen. Bevorzugte Beispiele sind Homo- oder Copolymere, umfassend Monomereinheiten, ausgewählt aus Vinylidenfluorid (VDF), Trifluorethylen (TrFE), 1,1-Chlorfluorethylen (CFE) und Chlortrifluorethylen (CTFE), mit der Maßgabe, dass mindestens eine der Monomereinheiten Vinylidenfluorid ist. Ein Copolymer in Sinne dieser Erfindung ist ein Polymer, welches aus einer Copolymerisationsreaktion mindestens zweier unterschiedlicher Comonomereinheiten erhalten wird.

Insbesondere bevorzugte Homo- und Copolymere sind Polyvinyliden (PVDF), Poly(vinyliden-co-trifuorethylen) (P(VDF-TrFE)), Poly(vinyliden-co-trifuorethylen-co-1,1-chlorfluorethylen) (P(VDF-TrFE-CFE)) und Poly(vinyliden-co-trifuorethylen-co-chlortrifluorethylen) (P(VDF-TrFE-CTFE)).

Die Copolymere umfassen als Comonomereinheit jeweils mindestens Vinylidenfluorid. Vorzugsweise beträgt der Anteil an Vinylidenfluorideinheiten in dem Copolymer mindestens 20 Gew.-%, bevorzugt mindestens 30 Gew.-%, stärker bevorzugt mindestens 40 Gew.-%, insbesondere mindestens 50 Gew.-%.

Die genannten Homo- oder Copolymere weisen vorzugsweise ein Gewichtsmittel des Molekulargewichts von 10.000 g/mol bis 1.000.000 g/mol, insbesondere 200.000 g/mol bis 700.000 g/mol , bestimmt mittels Gelpermeationschromatographie (GPC) in Dimethylsulfoxid (DMSO) oder einem Keton, wie z.B. Cyclohexanon, als Lösungsmittel.

Um die benötigte Volumen- und/oder Formänderung des elektroaktiven Materials an die auszugleichende Volumen- und/oder Formänderung anzupassen, können beispielsweise in einer Ausführungsform mehrschichtige elektroaktive Materialschichten eingesetzt werden. Hierbei können einzelne Schichten unterschiedlicher elektroaktiver Materialien in Form eines Laminats miteinander kombiniert werden. Sofern dies notwendig erscheint, können die einzelnen elektroaktiven Materialschichten mittels zwischen zwei elektroaktiven Materialschichten liegender, nicht-leitender Materialschichten voneinander getrennt werden.

Das Anbringen der elektrischen Spannung an das elektroaktive Material kann durch zusätzliche Komponenten inklusive einer aktiven Regelung realisiert werden. Alternativ kann die elektrische Spannung auch ohne zusätzliche Komponenten der Batteriezelle und/ oder der Batterie selbst entnommen werden.

Während die erfindungsgemäße Batterie grundsätzlich jede dem Fachmann bekannte Batterie sein kann, welche während des Be- und Entladungsvorgangs einer Volumen- und/oder Formänderung unterläuft, ist eine bevorzugte Ausführungsform der erfindungsgemäßen Batterie eine Lithium-Ionen-Batterie oder eine Lithium-Metall-Batterie ist. Besonders bevorzugt ist die erfindungsgemäße Batterie eine Lithium-Metall-Batterie.

Gegenstand der Erfindung ist ferner die Verwendung der erfindungsgemäßen Batteriezelle und/oder der erfindungsgemäßen Batterie in einem Elektrofahrzeug (EV), in einem Hybridfahrzeug (HEV), in einem Plug-In-Hybridfahrzeug (PHEV), in einem Werkzeug oder in einem Consumer-Elektronik-Produkt.

Darüber hinaus betrifft die Erfindung ein Verfahren zum Ausgleich von Volumen- und/oder Formänderungen in einer erfindungsgemäßen Batteriezelle und/oder in einer erfindungsgemäßen Batterie, welche während des Beladungsvorgangs und/oder des Entladungsvorgangs der Batteriezelle und/oder der Batterie auftreten, wobei die Volumen- und/oder Formänderung in dem Aktivmaterial bzw. der Aktivmaterialzusammensetzung der negativen und/oder positiven Elektrode, bzw. des Separators und/oder Elektrolyten, auftritt und durch eine gegenläufige Volumen- und/oder Formänderung eines elektroaktiven Materials kompensiert wird. Die gegenläufige Volumen- und/oder Formänderung des elektroaktiven Materials wird dabei vorzugsweise durch Anbringen einer Steuerungsspannung an dem elektroaktiven Material bewirkt wird. In einer Ausführungsform der Erfindung wird das Anbringen der Steuerspannung durch eine aktive Regelung bewirkt.

Die Volumen- und/oder Formänderung der elektroaktiven Materialien beim Anlegen einer elektrischen Spannung beträgt vorzugsweise bis zu 500 %, stärker bevorzugt bis zu 100 %, insbesondere bis zu 50 %, bezogen auf das Volumen bzw. die Form des elektroaktivem Materials vor dem Anlegen der elektrischen Spannung. Das Ausmaß der Volumen- und/oder Formänderung hängt dabei von der angelegten elektrischen Spannung und dem ausgewählten elektroaktiven Material ab und kann so optimal an die auftretende Volumen- und/oder Formänderung in der Batteriezelle sowie in der Batterie angepasst werden.

Die elektrische Spannung, welche zum Erreichen der Volumen- und/oder der Formänderung an das elektroaktive Material angelegt wird liegt vorzugsweise in einem Bereich von 50 V bis 10 kV, insbesondere in einem Bereich von 100 V bis 5 kV.

### Vorteile der Erfindung

Die vorliegende Erfindung ermöglicht es, Volumen- und/oder Formänderungen der Elektrodenaktivmaterialien in einer Batteriezelle, und Inhomogenitäten, welche während des Be- und Entladungsvorgangs der Batteriezelle auftreten, gezielt entgegenwirken zu können. Dadurch wird das Auftreten von Verschiebungen und mechanischen Spannungen in der Batteriezelle reduziert oder gänzlich unterbunden. Die erfindungsgemäße Batteriezelle und die erfindungsgemäße Batterie zeichnen sich so durch eine gleichbleibende Leistung während des gesamten Be- und Entladevorgangs aus.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung einer herkömmlichen Batteriezelle;
- Figur 2: eine schematische Darstellung einer erfindungsgemäßen Batteriezelle;
- Figur 3: eine schematische Darstellung alternative Ausführungsformen einer erfindungsgemäßen Batteriezelle;
- Figur 4: eine schematische Darstellung einer erfindungsgemäßen Batterie.

### Ausführungsformen der Erfindung

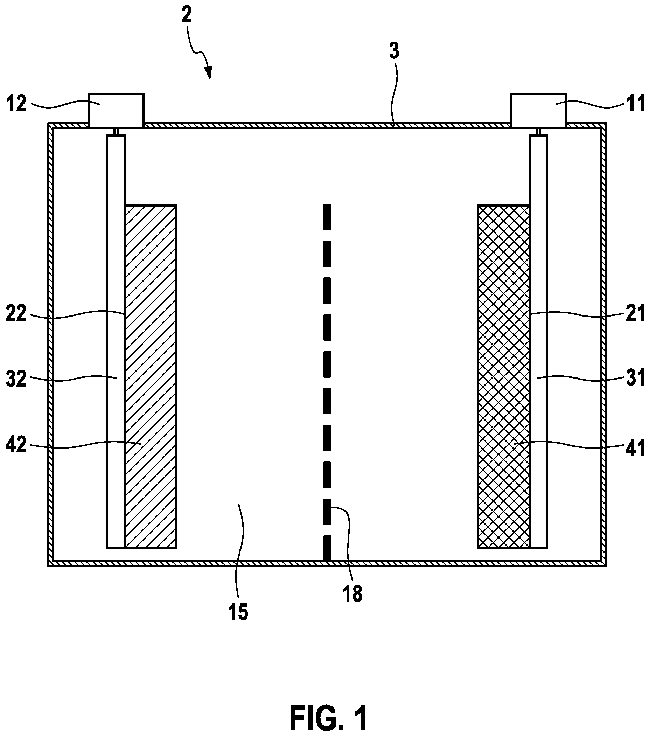

In Figur 1 ist eine Batteriezelle 2 schematisch dargestellt. Die Batteriezelle 2 umfasst ein Zellengehäuse 3, welches prismatisch, vorliegend quaderförmig, ausgebildet ist. Das Zellengehäuse 3 ist vorliegend elektrisch leitend ausgeführt und beispielsweise aus Aluminium gefertigt. Das Zellengehäuse 3 kann aber auch aus einem elektrisch isolierenden Material, beispielsweise Kunststoff, gefertigt sein.

Die Batteriezelle 2 umfasst ein negatives Terminal 11 und ein positives Terminal 12. Über die Terminals 11, 12 kann eine von der Batteriezelle 2 zur Verfügung gestellte Spannung abgegriffen werden. Ferner kann die Batteriezelle 2 über die Terminals 11, 12 auch geladen werden. Die Terminals 11, 12 sind beabstandet voneinander an einer Deckfläche des z.B. prismatischen Zellengehäuses 3 angeordnet.

Innerhalb des Zellengehäuses 3 der Batteriezelle 2 ist ein Elektrodenwickel oder Stack angeordnet, welcher zwei Elektroden, nämlich eine negativen Elektrode 21 und eine positive Elektrode 22, aufweist. Die negative Elektrode 21 und die positive Elektrode 22 sind jeweils folienartig ausgeführt und unter Zwischenlage eines Separators 18 zu dem Elektrodenwickel gewickelt. Anstelle des Separators 18 kann auch eine Schicht eines Festelektrolyten eingesetzt werden. Es ist auch denkbar, dass mehrere Elektrodenwickel in dem Zellengehäuse 3 vorgesehen sind. Anstelle des Elektrodenwickels kann auch beispielsweise ein Elektrodenstapel vorgesehen sein.

Die negative Elektrode 21 umfasst eine negative Aktivmaterialzusammensetzung 41, welche folienartig ausgeführt ist. Die negative Aktivmaterialzusammensetzung 41 weist als Grundstoff, d.h. als Aktivmaterial, beispielsweise metallisches Lithium auf. Alternativ könnten auch Silizium oder eine Silizium enthaltende Legierung oder Graphit eingesetzt werden.
Die negative Elektrode 21 umfasst ferner einen Stromableiter 31, welcher vorliegend folienartig ausgebildet ist. Im Falle z.B. einer Li-Metallanode ist eine solche Ausgestaltung nicht notwendig, da der elektrische Kontakt zum Stromableiter 31 der negativen Elektrode 21 über das metallische Lithium auf über weitere Entfernungen in der Regel gewährleistet ist. Die negative Aktivmaterialzusammensetzung 41 und der Stromableiter 31 der negativen Elektrode 21 sind vorliegend flächig aneinander gelegt und miteinander verbunden. Der Stromableiter 31 der negativen Elektrode 21 ist elektrisch leitfähig ausgeführt und aus einem Metall gefertigt, beispielsweise aus Kupfer. Der Stromableiter 31 der negativen Elektrode 21 ist elektrisch mit dem negativen Terminal 11 der Batteriezelle 2 verbunden.

Bei der positiven Elektrode 22 handelt es sich vorliegend beispielsweise um eine NCM-(Nickel-Cobalt-Mangan)-Elektrode. Die positive Elektrode 22 umfasst eine positive Aktivmaterialzusammensetzung 42, welche ein partikelförmiges positives Aktivmaterial umfasst. Zwischen den Partikeln des positiven Aktivmaterials sind Zusatzstoffe, insbesondere Leitruß und Binder, angeordnet. Das positive Aktivmaterial und die besagten Zusatzstoffe bilden dabei die positive Aktivmaterialzusammensetzung 42, einen Verbund, welcher folienartig ausgeführt ist.

Die positive Elektrode 22 umfasst ferner einen Stromableiter 32, welcher ebenfalls folienartig ausgebildet ist. Die positive Aktivmaterialzusammensetzung 42 und der Stromableiter 32 der positiven Elektrode 22 sind flächig aneinander gelegt und miteinander verbunden. Der Stromableiter 32 der positiven Elektrode 22 ist elektrisch leitfähig ausgeführt und aus einem Metall gefertigt, beispielsweise aus Aluminium. Der Stromableiter 32 der positiven Elektrode 22 ist elektrisch mit dem positiven Terminal 12 der Batteriezelle 2 verbunden.

Die negative Elektrode 21 und die positive Elektrode 22 sind durch den Separator 18 voneinander getrennt. Der Separator 18 ist ebenfalls folienartig ausgebildet. Der Separator 18 ist elektronisch isolierend ausgebildet, aber ionisch leitfähig, also für Lithium-Ionen durchlässig. Bei der Verwendung eines Festkörperlelektrolyten ist dieser Separator 18 gegebenenfalls nicht nötig.

Das Zellengehäuse 3 der Batteriezelle 2 ist mit einem flüssigen aprotischen Elektrolyt 15, oder mit einem Polymerelektrolyt, gefüllt. Der Elektrolyt 15 umgibt dabei die negative Elektrode 21, die positive Elektrode 22 und den Separator 18.

Auch der Elektrolyt 15 ist ionisch leitfähig und umfasst beispielsweise ein Gemisch aus mindestens einem zyklischen Carbonat (z.B. Ethylencarbonat (EC), Propylencarbonat (PC), Butylencarbonat (BC)) und mindestens einem linearen Carbonat (z.B. Dimethylencarbonat (DMC), Diethylcarbonat (DEC), Methylethylcarbonat (MEC)) als Lösungsmittel, sowie einem Lithiumsalz (z.B. LiPF₆, LiBF₄) als Additiv.

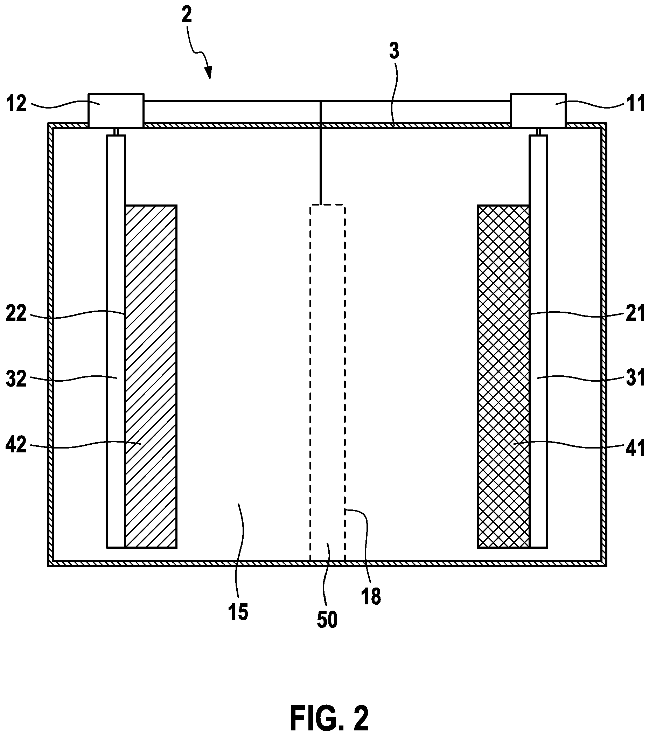

In Figur 2 ist eine erfindungsgemäße Batteriezelle 2 schematisch dargestellt. Die Batteriezelle 2 umfasst ebenfalls ein Zellengehäuse 3, welches prismatisch, vorliegend quaderförmig, ausgebildet ist. Die Batteriezelle 2 ähnelt weitgehend der Batteriezelle 2 aus Figur 1. Im Folgenden wird daher insbesondere auf Unterschiede zu der Batteriezelle 2 aus Figur 1 eingegangen.

Der Separator 18 ist vorliegend aus einem elektroaktiven Material 50 gefertigt. Der Separator 18 ist dabei weiterhin so ausgebildet, dass eine ausreichende Durchlässigkeit gegenüber den Ladungsträgern aus dem Elektrolyt 15 besteht. Insbesondere ist der Separator 18 aus einem porösen elektroaktiven Material 50 gefertigt. Beispielsweise wird eine Folie aus Polyvinylidenfluorid (PVDF) oder aus einem Copolymer, umfassend Vinylidenfluorid-Monomereinheiten, verwendet. Das elektroaktive Material 50 wird durch das Anlegen einer elektrischen Spannung zur Volumen- und/oder Formänderung angeregt und gleicht so die Volumen- und/oder Formänderung der Aktivmaterialzusammensetzungen 41, 42 der negativen bzw. positiven Elektroden 21, 22, bzw. des Separators 18 und/oder Elektrolyt 15, welche während des Be- und Entladungsvorgangs auftritt, aus. Die elektrische Spannung kann von einer externen Spannungsquelle stammen, oder wie vorliegend der Batteriezelle 2 selbst entnommen werden.

Zusätzlich oder in einer alternativen Ausführungsform kann die negative Aktivmaterialzusammensetzung 41 und/oder die positive Aktivmaterialzusammensetzung 42 ein elektroaktives Material 50 umfassen. Beispielsweise kann auf den Partikeln des negativen Aktivmaterials und/oder des positiven Aktivmaterials eine Beschichtung aus dem elektroaktiven Material 50 aufgebracht sein. Die Partikel des jeweiligen Aktivmaterials sind von der Beschichtung aus dem elektroaktiven Material 50 umgeben. Die Beschichtung aus dem elektroaktiven Material 50 umhüllt somit die Partikel des Aktivmaterials in der negativen Aktivmaterialzusammensetzung 41 und/oder der positiven Aktivmaterialzusammensetzung 42. Um einen Durchtritt der Ladungsträger aus dem Elektrolyt 15 zum Aktivmaterial zu ermöglichen, ist die Beschichtung aus dem elektroaktiven Material 50 in diesem Fall durchlässig, insbesondere porös, ausgestaltet.

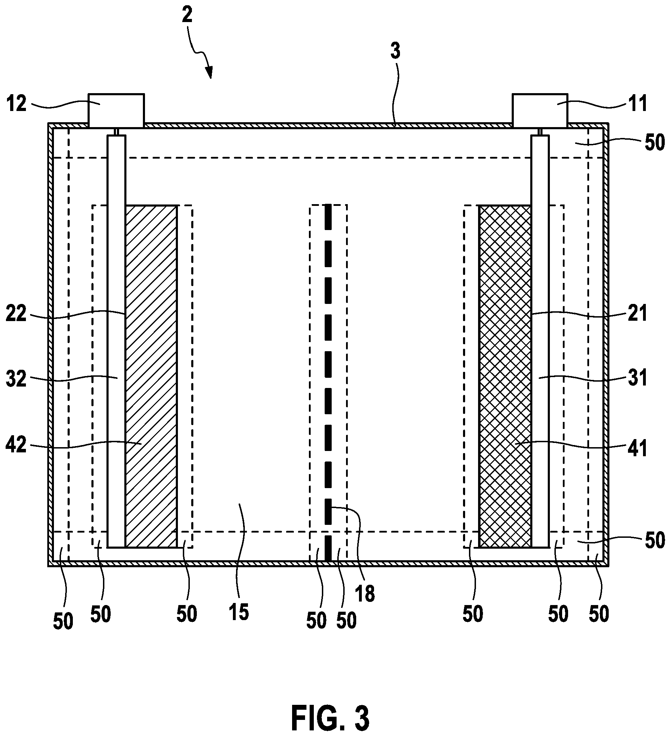

Figur 3 zeigt weitere alternative Ausführungsformen einer Batteriezelle 2 gemäß der Erfindung. Dabei ist das elektroaktive Material 50 flächig, vorliegend folienartig ausgeführt und auf der Oberfläche der negativen bzw. positiven Elektroden 21, 22, des Separators 18 oder des Innenseite des Zellengehäuses 3 aufgebracht. Aus Rücksicht auf die Übersichtlichkeit der schematischen Darstellung ist der Anschluss des elektroaktiven Materials 50 an die jeweilige Spannungsquelle in Figur 3 nicht gezeigt. Die einzelnen Ausführungsformen können allein oder in Kombination miteinander verwendet und so aufeinander abgestimmt werden, dass ein optimales Ergebnis erzielt wird.

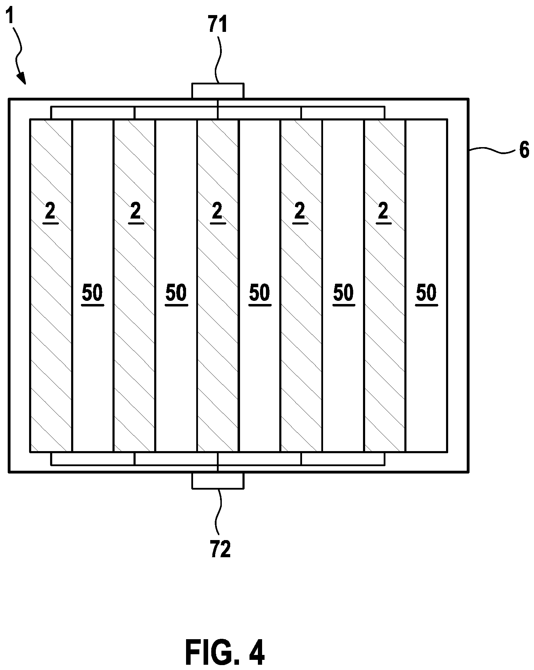

Figur 4 zeigt eine Batterie 1, umfassend eine Vielzahl - vorliegend fünf - einzelner Batteriezellen 2, welche miteinander verbunden sind. Zwischen den Batteriezellen 2 sind Schichten aus elektroaktivem Material 50 angeordnet. Dabei ist das elektroaktive Material 50 flächig, vorliegend folienartig ausgeführt und auf den äußeren Oberflächen der Zellengehäuses 3 aufgebracht. Aus Rücksicht auf die Übersichtlichkeit der schematischen Darstellung ist der Anschluss des elektroaktiven Materials 50 an die Spannungsquelle in Figur 4 nicht gezeigt. Je nach Bedarf kann das elektroaktive Material 50 auf jeder Batteriezelle 2 der Batterie 1 aufgebracht sein, oder nur auf jeder zweiten, dritten, vierten, usw. Batteriezelle 2 der Batterie 1. Die Batterie 1 umfasst weiter ein Batteriegehäuse 6 sowie einen negativen Pol 71 und einen positiven Pol 72, welche mit den jeweiligen negativen Terminals 11 und positiven Terminals 12 der einzelnen Batteriezellen 2 verbunden sind.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Batteriezelle (2), welche mindestens eine negative Elektrode (21), mindestens eine positive Elektrode (22) und mindestens einen Elektrolyt (15) umfasst, wobei die Batteriezelle (2) ferner mindestens ein elektroaktives Material (50) umfasst, welches durch Anlegen einer elektrischen Spannung zu einer Volumen- und/oder Formänderung angeregt werden kann.

2. Batteriezelle (2) nach Anspruch 1, wobei das elektroaktive Material (50) ein elektroaktives Polymer ist.

3. Batteriezelle (2) nach Anspruch 2, wobei das elektroaktive Polymer ein Homo- oder Copolymer ist, welches aus Monomereinheiten aufgebaut ist, die mindestens Vinylidenfluorid als eine Monomereinheit umfassen.

4. Batteriezelle (2) nach Anspruch 2 oder 3, wobei das elektroaktive Polymer ein Homo- oder Copolymer ist, welches Monomereinheiten, ausgewählt aus Vinylidenfluorid (VDF), Trifluorethylen (TrFE), 1,1-Chlorfluorethylen (CFE) und Chlortrifluorethylen (CTFE), umfasst, mit der Maßgabe, dass mindestens eine der Monomereinheiten Vinylidenfluorid ist.

5. Batteriezelle (2) nach einem der vorstehenden Ansprüche, wobei das elektroaktive Material (50), welches durch Anlegen einer elektrischen Spannung zu einer Volumen- und/oder Formänderung angeregt werden kann, mindestens in die Aktivmaterialzusammensetzung (41, 42) der negativen Elektrode (21) und/oder der positiven Elektrode (22) eingearbeitet ist.

6. Batteriezelle (2) nach einem der Ansprüche 1 bis 5, wobei das elektroaktive Material (50), welches durch Anlegen einer elektrischen Spannung zu einer Volumen- und/oder Formänderung angeregt werden kann, in Form einer elektroaktiven Materialschicht, insbesondere einer elektroaktiven Materialfolie, in die Batteriezelle (2) eingelegt ist.

7. Batterie (1), umfassend mindestens eine Batteriezelle (2) nach einem der vorstehenden Ansprüche.

8. Batterie (1), umfassend mindestens eine Batteriezelle (2), wobei die Batterie (1) ferner mindestens ein elektroaktives Material (50) umfasst, welches durch Anlegen einer elektrischen Spannung zu einer Volumen- und/oder Formänderung angeregt werden kann.

9. Batterie (1) nach Anspruch 8, umfassend mindestens zwei Batteriezellen (2), wobei das elektroaktive Material (50) zwischen den Batteriezellen (2) angeordnet ist.

10. Batterie (1) nach einem der Ansprüche 8 bis 9, wobei das elektroaktive Material (50) ein elektroaktives Polymer ist.

11. Verwendung einer Batteriezelle (2) nach einem der Ansprüche 1 bis 6 und/oder einer Batterie (1) nach einem der Ansprüche 7 bis 10 in einem Elektrofahrzeug (EV), in einem Hybridfahrzeug (HEV), in einem Plug-In-Hybridfahrzeug (PHEV), in einem Werkzeug oder in einem Consumer-Elektronik-Produkt.

12. Verfahren zum Ausgleich von Volumen- und/oder Formänderungen in einer Batteriezelle (2) nach einem der Ansprüche 1 bis 6 und/oder in einer Batterie (1) nach einem der Ansprüche 7 bis 10, welche während des Beladungsvorgangs und/oder des Entladungsvorgangs der Batteriezelle (2) und/oder der Batterie (1) auftreten, wobei die Volumen- und/oder Formänderung in der Aktivmaterialzusammensetzung (41, 42) der negativen Elektrode (21) und/oder positiven Elektrode (22) auftritt und durch eine gegenläufige Volumen- und/oder Formänderung eines elektroaktiven Materials (50) kompensiert wird.

13. Verfahren nach Anspruch 12, wobei die gegenläufige Volumen- und/oder Formänderung des elektroaktiven Materials (50) durch Anbringen einer Steuerungsspannung an dem elektroaktiven Material (50) bewirkt wird.

14. Verfahren nach Anspruch 13, wobei das Anbringen der Steuerspannung durch eine aktive Regelung bewirkt wird.
